# EUROPÄISCHE PATENTSCHRIFT

(11) **EP 3 055 253 B1**
(45) Veröffentlichungstag und Bekanntmachung des Hinweises auf die Patenterteilung: **24.10.2018**
(21) Anmeldenummer: 14766401.5
(22) Anmeldetag: 16.09.2014
(51) Int. Cl.: C01G 29/00, B41M 5/26, C08K 3/22, C09C 1/00, B41J 2/455, C08K 3/00, C08K 3/24, C08K 3/34, C08K 3/36

(54) **PIGMENTE BASIEREND AUF BISMUTHVERBINDUNGEN**
PIGMENTS BASED ON BISMUTH COMPOUNDS
PIGMENTS A BASE DE BISMUTH

(30) Priorität: 11.10.2013 DE 102013016932
(43) Veröffentlichungstag der Anmeldung: 17.08.2016
(73) Patentinhaber: Merck Patent GmbH, 64293 Darmstadt (DE)
(72) Erfinder: KNIESS, Helge Bettina, 64380 Rossdorf (DE); VAN DUIJNHOVEN, Franciscus Gerardus Henricus, NL-6731 NX Mierlo (NL); GELISSEN, Franciscus Wilhelmus Maria, 52538 Selfkant (DE)
(86) Internationale Anmeldenummer: PCT/EP2014/002495
(87) Internationale Veröffentlichungsnummer: WO 2015/051868

(56) Entgegenhaltungen:
- EP-B1- 1 190 988
- WO-A1-01/68776
- US-A1- 2007 029 294

## Beschreibung

Die vorliegende Erfindung betrifft Pigmente basierend auf Bismut-Verbindungen sowie deren Verwendung, vorzugsweise als laserabsorbierendes Additiv, sowie ein Verfahren für deren Herstellung.

Die Identifikationsmarkierung von Produkten nimmt in annähernd allen Industriezweigen immer weiter an Bedeutung zu. Zum Beispiel ist es häufig notwendig Produktionsdaten, Ablaufdaten, Strichcodes, Firmenlogos, Seriennummern, usw. auf Kunststoffteilen oder flexiblen Kunststofffolien aufzubringen. Diese Beschriftungen werden derzeit meist unter Verwendung herkömmlicher Techniken, wie Drucken, Warmprägen, anderen Prägeverfahren oder Etikettieren ausgeführt. Insbesondere bei Kunststoffen wird jedoch immer mehr Wert auf ein kontaktloses, sehr schnelles und flexibles Beschriftungsverfahren mit Lasern gelegt. Mit dieser Technik lassen sich grafische Aufdrucke, wie z. B. Strichcodes, mit hoher Geschwindigkeit sogar auf nichtplanare Oberflächen aufbringen. Da sich die Beschriftung innerhalb des Kunststoffgegenstands selbst befindet, ist sie dauerhaft abriebfest.

Es ist allgemein bekannt, dass bestimmte Materialien wie Polymere, z. B. Kunststoffe und Harze, bei Bestrahlung mit Laserlicht Energie aus dem Laserlicht absorbieren und diese Energie in Wärme umwandeln können, wobei eine farbverändernde Reaktion (=Beschriftung) im Material induziert werden kann. Laserlichtabsorptionsmittel werden verwendet um die Laserlichtabsorption zu verbessern, wenn die intrinsische Fähigkeit eines Polymers hinsichtlich der Absorption von Laserlicht unzureichend ist.

Viele Kunststoffe, z. B. Polyolefine und Polystyrole, konnten bisher nur schwer oder gar nicht mit einem Laser beschriftet werden. Ein CO₂-Laser, der Infrarotlicht im Bereich von 10,6 µm emittiert, ergibt nur eine sehr schwache, kaum lesbare Beschriftung auf Polyolefinen oder Polystyrolen, selbst bei Verwendung einer hohen Leistung. Bei Polyurethanelastomeren und Polyetheresterelastomeren gibt es keine Wechselwirkung mit Nd-YAG-Lasern, aber bei Verwendung von CO₂-Lasern tritt eine Prägung auf. Ein Kunststoff darf kein Laserlicht reflektieren oder weiterleiten, da es dann nicht zu einer Wechselwirkung kommt. Ebenso darf jedoch keine übermäßig starke Absorption stattfinden, da der Kunststoff in diesem Fall verdampft und nur eine Prägung übrig bleibt. Die Absorption von Laserstrahlen, und daher die Wechselwirkung mit dem Material, hängt von der chemischen Struktur der Zusammensetzung und von der verwendeten Laserwellenlänge ab. Es ist häufig erforderlich geeignete Additive wie Absorptionsmittel zuzusetzen um Kunststoffe laserbeschriftbar zu machen.

Das erfolgreiche Absorptionsmittel sollte eine sehr blasse inhärente Farbe aufweisen und/oder nur in sehr geringen Mengen eingesetzt werden müssen. Aus dem Stand der Technik ist bekannt, dass das Kontrastmittel Antimontrioxid solche Kriterien erfüllt. Allerdings ist Antimontrioxid toxisch und steht im Verdacht kanzerogen zu sein, und daher sind antimonfreie Laserbeschriftungsadditive erwünscht.

Antimonfreie Laserbeschriftungsadditive sind aus der Literatur bekannt, wie z.B. beschrieben in den Patentanmeldungen WO 2011/083100, WO 2011/050934 und WO 2006/065611. In der EP 1 190 988 B1 werden laserbeschriftbare Verbindungen, die Bismut und mindestens ein zusätzliches Metall enthalten, offenbart. US 2007/029294 richtet sich auf die Laserbeschriftung von Polymeren mit Verbindungen der Formel MOCI, wobei M entweder As, Sb oder Bi ist, sowie mit BiONO₃, Bi₂O₂CO₃, BiOOH, BiOF, BiOBr, Bi₂O₃ oder BiOC₃H₅O₇.

WO 01/68776 A1 offenbart Pigmente der Zusammensetzung BixOySiz die sich ebenfalls zum Laser-Markieren von Polymeren eignen.

WO 2011/050934 beschreibt beispielsweise die Stabilisierung von Bi₂O₃ durch Extrusion von Bi₂O₃ und eines funktionalisierten Polymers, so dass das Bi₂O₃ enthaltende Additiv anschließend in Polymere ("Matrix") mit einem höheren als 220 °C liegenden Schmelzpunkt eingearbeitet werden kann, z.B. in Polyester, Polyamid oder Polycarbonat. Der Nachteil dieser Methode liegt darin, dass das hergestellte Bismut-Additiv nicht universell für jede Polymer-Matrix verwendet kann, d.h. es liegt eine Nicht-Mischbarkeit von verschiedenen Polymeren vor, z. B. mit Polyethylen und Polyamid. Der Nachteil von auf Bismut basierenden Laserbeschriftungsadditiven ist, dass sie nicht für alle Arten von Kunststoffen geeignet sind. In bestimmten Matrixpolymeren zeigen die Bismut-Verbindungen eine starke Verfärbung, wenn hohe Verarbeitungstemperaturen, d. h. > 220 °C eingesetzt werden. In diesen Fällen kann Bi₂O₃ nicht als Farbbildner für die Laserbeschriftung von Matrixpolymeren, z.B. von Polyamid verwendet werden, da während der Verarbeitung eine exotherme Reaktion (Zersetzung) stattfindet, die zu einer extremen Verfärbung des Produkts führt. Das Produkt wird dunkel und eine Markierung ist nicht mehr zu erkennen.

Aufgabe der vorliegenden Erfindung ist es daher ein Pigment basierend auf ein oder mehreren Bismut-Verbindungen in einer Form bereitzustellen, das als Additiv, vorzugsweise als Laseradditiv, direkt in jedes Polymer universell eingearbeitet werden kann, ohne dass Zersetzungsreaktionen mit der Polymer-Matrix stattfinden. Das Pigment sollte vorzugsweise farblos sein um als Laseradditiv universell einsetzbar zu sein.

Überraschenderweise wurde nun gefunden, dass Pigmente basierend auf ein oder mehreren Bismut-Verbindungen, die mit SiO₂ in Gegenwart einer chlorhaltigen Verbindung beschichtet und anschließend geglüht werden, keine Zersetzungsreaktionen bei der Einarbeitung in Kunststoffen zeigen und weiterhin auch keine Schwierigkeiten bei der Verarbeitung, wie z.B. Nicht-Mischbarkeit, zu beobachten sind. Begünstigt wird dies durch die Ausbildung von BiₓX_{y}O_{z}- und BiₐSi_{b}O_{c}-Phasen während der Glühung, wie z.B. Bi₄Cl₂O₅, Bi₁₂Cl₆O₁₅, Bi₂₄Cl₁₀O₃₁, Bi₂SiO₅, Bi₄(SiO₄)₃ und/oder Bi₁₂SiO₂₃-Phasen.

Gegenstand der Erfindung sind somit Pigmente der Formel I

nBi₂O₃ * mBiOX * oBiₓX_{y}O_{z} * pBiₐSi_{b}O_{c} I

wobei
X Halogen, vorzugsweise Cl
x 2-30, vorzugsweise 2-25
y 1-15, wobei im Fall y=1 dann z > 1 ist,
z 1-35
a 0-15
b 1-5
c 1-25, vorzugsweise 1-20 und
n 0-5
m 0-5
o 1-5
p 1-5
bedeuten.

Gegenstand der vorliegenden Erfindung ist ebenfalls ein Verfahren zur Herstellung der erfindungsgemäßen Pigmente sowie die Verwendung der Pigmente als Additiv u.a. in Farben, Lacken, Kunststoffen, Druckfarben sowie in kosmetischen Formulierungen.

Als Basissubstrat kommen an sich alle dem Fachmann bekannten unbeschichteten Bismut-Verbindungen in Frage, wie z.B. Bi₂O₃, BiOCI, Bi(NO₃)₃, BiONO₃, Bi₂O₂CO₃, BiOOH, BiOF, BiOBr, BiOC₃H₅O₇, Bi(C₇H₅O₂)₃, BiPO₄, Bi₂(SO₄)₃, BiₐM_{b}O_{c} (mit M = Zn, Ti, Fe, Cu, Al, Zr, P, Sn, Sr, Si, Y, Nb, La, Ta, Pr, Ca, Mg, Mo, W, Sb, Cr, Ba, Ce und a = 0,3-70, b = 0,05-8 und c = 1-100). Besonders bevorzugte Basissubstrate sind Bi₂O₃, ferner BiOCI, BiOOH, BiOF und BiOBr. Ganz besonders bevorzugt ist als Substrat das Bi₂O₃.

Die Größe des Basissubstrats ist an sich nicht kritisch und kann auf den jeweiligen Anwendungszweck abgestimmt werden. In der Regel liegen die Bismut-Verbindungen als Partikel vor und haben eine Partikelgröße von 0,001 - 100 µm, vorzugsweise von 0,005 - 50 µm, und insbesondere von 0,01 -10 µm.

Alle dem Fachmann bekannten Bismut-Verbindungen können eingesetzt werden, unabhängig von der Teilchenform. Die Form der Substrate ist nicht kritisch und kann beispielsweise kugel-, oval-, stäbchen, plättchenförmig oder unförmig sein.

Bi₂O₃ ist kommerziell erhältlich, z. B. von der 5N Plus Lübeck GmbH, Deutschland (früher MCP-HEK GmbH), von Poch S.A., Polen oder von der Merck Millipore GmbH, Deutschland.

Das Basissubstrat wird mit SiO₂ in Gegenwart einer oder meherer Chlorverbindungen beschichtet, wobei die Beschichtung mit allen dem Fachmann bekannten Verfahren erfolgen kann. Die Beschichtung der Basissubstrate mit SiO₂ erfolgt vorzugsweise nasschemisch, wobei die zur Herstellung von Perlglanzpigmenten entwickelten nass-chemischen Beschichtungsverfahren angewendet werden können. Weiterhin kann die SiO₂-Beschichtung auch in einem Wirbelbettreaktor durch Gasphasenbeschichtung erfolgen, wobei z. B. die in EP 0 045 851 und EP 0 106 235 zur Herstellung von Perlglanzpigmenten vorgeschlagenen Verfahren entsprechend angewendet werden können.

Bei der Chlorverbindung handelt es sich vorzugsweise um HCl, das während der Beschichtung mit SiO₂ als pH-Regler eingesetzt wird. Als Chlorverbindungen können aber auch beispielsweise NaCl, KCl, CaCl₂, MgCl₂ zum Einsatz kommen. Die Konzentration der Chlorverbindung(en) bei der nasschemischen Beschichtung oder im Wirbelbett beträgt vorzugsweise 0,1 - 200 %, insbesondere 5 -150 % bezogen auf das eingesetzte Substat. Bei der Nassbeschichtung wird das Basissubstrat (Bismut-Verbindung), in Wasser suspendiert und mit ein oder mehreren hydrolysierbaren Metallsalzen oder einer Wasserglaslösung bei einem für die Hydrolyse geeigneten pH-Wert versetzt, der so gewählt wird, dass das SiO₂ bzw. das entsprechende Hydrat direkt auf das Substrat ausgefällt wird, ohne dass es zu Nebenfällungen kommt. Der pH-Wert wird üblicherweise durch gleichzeitiges Zudosieren einer Base und/oder Säure konstant gehalten. Anschließend werden die beschichteten Substrate abgetrennt, gewaschen und bei 50-150 °C in der Regel für 6 -18 h getrocknet und bei 300 bis 815 °C, vorzugsweise bei 500 bis 800 °C, in der Regel für 15 min - 2 h geglüht.

Die Auffällung der SiO₂-Schicht auf das Substrat erfolgt vorzugsweise durch Zugabe einer Kalium- oder Natronwasserglas-Lösung bei einem geeigneten pH-Wert in Gegenwart einer Chlorverbindung, wie z.B. Salzsäure zur Einstellung des pH-Wertes.

Der Mengenanteil von SiO₂ bezogen auf das Substrat beträgt vorzugsweise 0,1-200 %, insbesondere 5-100 % und ganz besonders bevorzugt 10-50 %.

In Abhängigkeit von der Form und Größe des eingesetzten Substrats weist die SiO₂-Schicht vorzugsweise Schichtdicken von 1 - 500 nm, insbesondere bevorzugt von 1 - 300 nm auf.

Optional können die erfindungsgemäßen Pigmente noch mit einer oder mehreren zusätzlichen Schichten für die Erzielung von beispielsweise koloristischen Effekten ausgerüstet werden.

Entscheidend für die Stabilisierung der Bismut-Verbindungen ist der Glühprozess nach der Belegung mit SiO₂. Die Glühtemperatur beträgt vorzugsweise ≥ 300 °C. Das finale Pigment weist nach dem Glühprozess eine oder mehrere Mischphasen auf.

Besonders bevorzugte erfindungsgemäße Pigmente enthalten eine oder mehrere Verbindungen ausgewählt aus der Gruppe der folgenden Bismut-Verbindungen:
- Bi₄Cl₂O₅
- Bi₁₂Cl₆O₁₅
- Bi₂₄Cl₁₀O₃₁
- Bi₂SiO₅
- Bi₄(SiO₄)₃
- Bi₁₂SiO₂₀

Ganz besonders bevorzugte Pigmente enthalten folgende Mischphasen:
- Bi₂₄Cl₁₀O₃₁ + Bi₂SiO₅ + Bi₄(SiO₄)₃ oder
- Bi₂₄Cl₁₀O₃₁ + BiOCl oder
- Bi₂₄Cl₁₀O₃₁ + BiOCl + Bi₄O₅Cl₂ oder
- Bi₁₂Cl₆O₁₅ + BiOCl + Bi₂O₃ oder
- Bi₂₄Cl₁₀O₃₁ + Bi₄ Cl₂O₅
- Bi₁₂SiO₂₀ + Bi₂SiO₅ + Bi₄(SiO₄)₃
- Bi₂₄Cl₁₀O₃₁ + Bi₂SiO₅

Die erfindungsgemäßen Pigmente liegen als Partikel vor und haben vorzugsweise Partikelgrößen von 0,01 - 100,5 µm, vorzugsweise von 0,02 - 50 µm, und insbesondere von 0,01 -10 µm.

Die erfindungsgemäßen Pigmente liegen als Partikel vor und können mit allen bekannten Effektpigmenten, konventionellen Absorptionspigmenten und/oder funktionellen Pigmenten in Mischung in allen bekannten Anwendungsmedien eingesetzt werden und ergeben je nach Zusammensetzung der Mischung außergewöhnliche Farb- und Anwendungseffekte, z.B. bei der Laserbeschriftung von Kunststoffteilen.

Die erfindungsgemäßen Pigmente können in Lacken, z.B. Auto- und Industrielacke sowohl lösemittel- als auch wasserbasierend, und Pulverlacke, in Kunststoffen, Druckfarben, keramischen Glasuren oder kosmetischen Formulierungen angewandt werden. Auch können sie in Form von Präparationen (Pearlets, Pasten, Anteigungen), z.B. für den Einsatz in Druckfarben oder Kunststoffen genutzt werden.

Besonders bevorzugt ist der Einsatz der erfindungsgemäßen Pigmente in Kunststoffen mit einem Schmelzpunkt, der mindestens so hoch ist wie der des verwendeten Kunststoffs, vorzugsweise > 220 °C.

Die vorliegende Erfindung betrifft daher auch eine laserbeschriftbare Zusammensetzung, die ein Matrixpolymer und das erfindungsgemäße Pigment enthält. Das Pigment wird vorzugsweise in Konzentrationen von 0,05 - 5 Gew.%, insbesondere von 0,1- 2 Gew.% und ganz besonders bevorzugt von 0,2 - 1 Gew.%, bezogen auf das zu beschriftende Matrixpolymer eingesetzt.

Alle bekannten Matrixpolymere wie z. B. Kunststoffe, Bindemittel, Harze, usw. können für die Laserbeschriftungs- und Laserschweißanwendung eingesetzt werden. Geeignete Kunststoffe sind Thermoplaste und Duroplaste wie z. B. Polyethylen (PE), Polypropylen (PP), Polyamid (PA), Polyester, Polyether, Polyphenylenether, Polyacrylat, Polyurethan (PU), Polyoxymethylen (POM), Polymethacrylat, Polymethylmethacrylat (PMMA), Polyvinylacetat (PVAC), Polystyrol (PS), Acrylnitril-Butadien-Styrol (ABS), Acrylnitril-Styrol-Acrylat (ASA), ABS-gepfropftes Polymer, Polybutylenterephthalat (PBT), Polyethylenterephthalat (PET), Polyvinylchlorid (PVC), Polyvinylidenchlorid (PVDC), Polyvinylidenfluorid (PVDF), Polytetrafluorethylen (PTFE), Polycarbonat (PC), Polyethersulfone, Polyetherketon, thermoplastisches Polyurethan (TPU), thermoplastische Elastomere (TPE), Epoxyharz (EP), Silikonharz (SI), ungesättigtes Polyesterharz (UP), Phenolformaldehydharz (PF), Harnstoffformaldehydharz (UF), Melaminharz (MF) und Copolymere davon und/oder Mischungen davon. Das Polymer kann auch ein Copolymer oder Blockcopolymer, usw. sein. Es können gebräuchliche und geeignete Additive vorhanden sein.

Der Kunststoff wird wie folgt mittels geeigneter Laserbestrahlung beschriftet oder geschweißt.

Die Beschriftungsmethode mittels Laser ist so, dass die Probe in den Strahlengang eines gepulsten Laserstrahls, vorzugsweise eines Nd:YAG-Lasers, gebracht wird. Die Beschriftung kann auch mit einem CO₂-Laser, z. B. unter Verwendung einer Maskentechnik erfolgen. Die gewünschten Ergebnisse können auch mit anderen gebräuchlichen Arten von Lasern erreicht werden, deren Wellenlänge innerhalb des Bereichs der hohen Absorption der verwendeten Mikrokugeln liegt. Die erhaltene Beschriftung wird durch die Bestrahlungsdauer (oder Anzahl von Pulsen im Falle eines gepulsten Lasers) und durch die vom Laser emittierte Leistung sowie durch das verwendete Polymersystem bestimmt. Die Leistung des verwendeten Lasers hängt von der spezifischen Anwendung ab und kann von einem Fachmann in einem spezifischen Fall ohne Weiteres bestimmt werden.

Beim Laserbeschriften hat der verwendete Laser im Allgemeinen eine Wellenlänge in einem Bereich von 157 nm bis 10,6 µm, vorzugsweise in einem Bereich von 532 nm bis 10,6 µm. Beispiele, die genannt werden können, sind ein CO₂-Laser (10,6 µm) und ein Nd:YAG-Laser (1064 nm, 532 nm oder 355 nm) sowie ein gepulster UV-Laser. Excimerlaser weisen die folgenden Wellenlängen auf: F₂-Excimerlaser: 157 nm, ArF-Excimerlaser: 193 nm, KrCl-Excimerlaser: 222 nm, KrF-Excimerlaser: 248 nm, XeCl-Excimerlaser: 308 nm, XeF-Excimerlaser: 351 nm sowie frequenzvervielfachte Nd:YAG-Laser: Wellenlänge von 355 nm (frequenzverdreifacht) oder 265 nm (frequenzvervierfacht). Besonders bevorzugt ist die Verwendung von Nd:YAG-Lasern (1064 oder 532 nm) und CO₂-Lasern. Die Energiedichten der verwendeten Laser liegen im Allgemeinen innerhalb eines Bereichs von 0,3 mJ/cm² bis 50 J/cm², vorzugsweise von 0,3 mJ/cm² bis 10 J/cm².

Werden gepulste Laser verwendet, liegt die Pulsfrequenz im Allgemeinen innerhalb eines Bereichs von 1 bis 150 kHz. Entsprechende Laser, die im erfindungsgemäßen Verfahren verwendet werden können, stehen kommerziell zur Verfügung.

Das Beschriften mit dem Laser wird vorzugsweise ausgeführt, indem der Gegenstand in den Strahlengang eines CO₂-Lasers (10,6 µm) oder eines gepulsten Lasers, vorzugsweise eines Nd:YAG-Lasers eingeführt wird.

Die erfindungsgemäßen Pigmente können in jedem beliebigen Bereich verwendet werden, in dem gebräuchliche Druckprozesse bisher zur Beschriftung oder Markierung von Matrixpolymeren verwendet wurden. Annähernd jeder Kunststoffgegenstand kann in einer lasermarkierbaren oder laserbeschriftbaren Form erhalten werden. Jede Art von Gegenstand, der aus einem Matrixpolymer wie einem Kunststoff besteht, kann mit Funktionsdaten, Strichcodes, Logos, Grafiken, Bildern und Identifizierungscodes versehen werden. Darüber hinaus können sie z.B. Anwendung finden
- in medizinischer Ausrüstung wie Röhrchen, Behältern für Gewebeproben oder Flüssigkeiten, Spritzen, Töpfen, Abdeckungen, Kathetern,
- im Automobilbereich z. B. für Flüssigkeitsbehälter, Verkabelungen, Komponenten,
- im Telekom- und E&E-Bereich z. B. für GSM-Vorderteile, Tastaturen, Mikroschalter,
- in Sicherheits- und Identifizierungsanwendungen wie z. B. Kreditkarten, Identifizierungskarten, Tieridentifizierungsmarken, Etiketten, Sicherheitsstreifen,
- in Marketinganwendungen wie z. B. Logos, Dekoration auf Korken, Golfbällen, Werbeartikeln,
- in Verpackungen wie z. B. ein- und mehrlagigen Folien, Flaschen, Kappen und Verschlüsse, einschließlich Schraubkappen für Flaschen, Sicherheitsverschlüsse und synthetischen Korken.

Zum Beispiel können Formen aus Kunststoffen, die das erfindungsgemäße Pigment enthalten, in der Elektroindustrie, Elektronikindustrie und Motorfahrzeugindustrie verwendet werden. Mit Hilfe von Laserlicht ist es möglich Identifizierungsmarkierungen oder Beschriftungsmarkierungen selbst an Stellen zu erzeugen, zu denen der Zugang schwierig ist, zum Beispiel auf Kabeln, Leitungen, Dekostreifen oder funktionalen Teilen im Heizungs-, Lüftungs- und Kältesektor oder auf Schaltern, Steckern, Hebeln oder Griffen. Das erfindungsgemäße Polymersystem enthaltend Pigmente der Formel I kann auch für Verpackungen im Nahrungsmittel- und Getränkesektor oder im Spielzeugsektor verwendet werden. Die Beschriftungen auf der Verpackung sind wisch- und kratzbeständig, beständig bei nachgelagerten Sterilisierungsprozessen und können auf eine hygienisch saubere Weise beim Beschriftungsprozess eingesetzt werden. Vollständige Etikettenmotive können dauerhaft auf Verpackungen von wiederverwendbaren Systemen aufgebracht werden. Ein weiterer wichtiger Anwendungssektor der Laserbeschriftung ist die Beschriftung von Kunststoffen zur Erzeugung von individuellen Identifizierungsmarkierungen für Tiere, die als Rinderohrmarke oder nur Ohrmarke bekannt sind. Die spezifisch mit dem Tier zusammenhängenden Informationen werden über ein Strichcodesystem gespeichert. Bei Bedarf können sie mithilfe eines Scanners wieder abgerufen werden. Die Beschriftung muss äußert beständig sein, da einige Marken viele Jahre lang an den Tieren verbleiben.

Laserschweißen mit dem erfindungsgemäßen Pigment kann in allen Bereichen durchgeführt werden, bei denen gebräuchliche Fügeverfahren eingesetzt wurden und in denen es bisher nicht möglich war, den Schweißprozess aufgrund von laserdurchlässigen Polymeren oder blassen Farben einzusetzen. Der Schweißprozess für laserdurchlässige Kunststoffe stellt also eine Alternative zu herkömmlichen Fügeverfahren dar, zum Beispiel Hochfrequenzschweißen, Vibrationsschweißen, Ultraschallschweißen, Heißluftschweißen oder auch Adhäsionskleben von Kunststoffteilen.

Die unten folgenden Beispiele sind dazu gedacht, die Erfindung zu erläutern, ohne sie einzuschränken. Die Prozentangaben beziehen sich, wenn nicht anders angegeben, auf das Gewicht.

### Beispiele

### Beispiel 1: 50 % SiO₂ bezogen auf das Substrat; Glühtemperatur: 700°C

100 g Bi₂O₃ (Bismuth Oxide, varistor grade fine; mittlere Teilchengröße: 2 µm, Fa. 5N Plus Lübeck GmbH) werden in 2 I entmineralisiertem Wasser unter Rühren auf 75 °C erhitzt. Nun wird mit einer 10 %igen Salzsäure der pH-Wert der Suspension auf 7,5 eingestellt. Es folgt das Zudosieren einer Natronwasserglas-Lösung (182 g Natronwasserglas-Lösung, enthaltend 27,5 % SiO₂, werden in 182 g voll entsalztem Wasser gelöst), wobei der pH-Wert durch gleichzeitiges Zutropfen einer 10 %igen Salzsäure konstant gehalten wird. Nach vollständiger Zugabe wird 0,5 h nachgerührt.

Das Produkt wird filtriert, gewaschen, 12 h bei 120 °C getrocknet, 0,5 h bei 700 °C geglüht, durch ein 100 µm Sieb gesiebt und mit Hilfe von XRD untersucht.

Das so erhaltene, leicht gelbliche Material wird mittels Extruder 0,2 %ig in Polyamid eingearbeitet. Dieses Compound wird dann auf einer Spritzgußmaschine zu Testplatten geformt. Auf diese Platten wird mit einem Nd:YAG Laser (Fa. Trumpf: Schreibgeschwindigkeit: 500-5000 mm/s, Pulsfrequenz: 20-100 kHz) ein Testraster markiert, mit welchem eine große Bandbreite an verschiedenen Lasereinstellungen hinsichtlich Energie des Lasers, Geschwindigkeit des Laserstrahls und Frequenz der Laserpulse dargestellt werden können. Das Additiv aus Beispiel 1 zeigt dabei über nahezu das gesamte Spektrum unterschiedlicher Laserparameter eine gleichmäßige schwarze Markierung von ausgezeichnetem Kontrast.

### Vergleichsbeispiel 1: Einarbeitung von Bi₂O₃ in Polyamid

Bi₂O₃ (Bismuth Oxide, varistor grade fine; mittlere Teilchengröße: 2 µm, Fa. 5N Plus Lübeck GmbH) wird mittels Extruder 1 %ig in Polyamid eingearbeitet. Bereits bei der Verarbeitung im Extruder kommt es zu Zersetzungsreaktionen und es entsteht ein dunkel bis schwarz verfärbtes Produkt.

Das "Compound" wird dann auf einer Spritzgußmaschine zu dunkelbraunen bis schwarzen Testplatten geformt. Auf diese Platten wird mit einem Nd:YAG Laser (Fa. Trumpf: Schreibgeschwindigkeit: 500-5000 mm/s, Pulsfrequenz: 20-100 kHz) ein Testraster markiert. Der Kontrast der dunklen Beschriftung auf dunklem Untergrund ist mit dem Auge kaum erkennbar.

### Beispiel 2: 6,25 % SiO₂ bezogen auf das Substrat; Glühtemperatur: 700 °C

100 g Bi₂O₃ (Bismuth Oxide, varistor grade fine; mittlere Teilchengröße: 2 µm, Fa. 5N Plus Lübeck GmbH) werden in 2 I entmineralisiertem Wasser unter Rühren auf 75 °C erhitzt. Nun wird mit einer 10 %igen Salzsäure der pH-Wert der Suspension auf 7,5 eingestellt. Es folgt das Zudosieren einer Natronwasserglas-Lösung (23 g Natronwasserglas-Lösung, enthaltend 27,5 % SiO₂, werden in 46 g voll entsalztem Wasser gelöst), wobei der pH-Wert durch gleichzeitiges Zutropfen einer 10 %igen Salzsäure konstant gehalten wird. Nach vollständiger Zugabe wird 0,5 h nachgerührt.

Das Produkt wird filtriert, gewaschen, 12 h bei 140 °C getrocknet, 1 h bei 700 °C geglüht, durch ein 100 µm Sieb gesiebt und mithilfe von XRD untersucht.

### Beispiel 3: 100 % SiO₂ bezogen auf das Substrat; Glühtemperatur: 500 °C

100 g Bi₂O₃ (Bismuth Oxide, varistor grade fine; mittlere Teilchengröße: 2 µm, Fa. 5N Plus Lübeck GmbH) werden in 2 I entmineralisiertem Wasser unter Rühren auf 75 °C erhitzt. Nun wird mit einer 10 %igen Salzsäure der pH-Wert der Suspension auf 7,5 eingestellt. Es folgt das Zudosieren einer Natronwasserglas-Lösung (364 g Natronwasserglas-Lösung, enthaltend 27,5 % SiO₂, werden in 364 g voll entsalztem Wasser gelöst), wobei der pH-Wert durch gleichzeitiges Zutropfen einer 10 %igen Salzsäure konstant gehalten wird. Nach vollständiger Zugabe wird 0,5 h nachgerührt.

Das Produkt wird filtriert, gewaschen, 12 h bei 120°C °C getrocknet, 2 h bei 500 °C geglüht, durch ein 100 µm Sieb gesiebt und mithilfe von XRD untersucht.

### Beispiel 4: 12,5 % SiO₂ bezogen auf das Substrat; Glühtemperatur: 700 °C

100 g Bi₂O₃ (Bismuth Oxide, varistor grade fine; mittlere Teilchengröße: 2 µm, Fa. 5N Plus Lübeck GmbH) werden in 2 I entmineralisiertem Wasser unter Rühren auf 75 °C erhitzt. Nun wird mit einer 10 %igen Salzsäure der pH-Wert der Suspension auf 7,5 eingestellt. Es folgt das Zudosieren einer Natronwasserglas-Lösung (46 g Natronwasserglas-Lösung, enthaltend 27,5 % SiO₂, werden in 46 g voll entsalztem Wasser gelöst), wobei der pH-Wert durch gleichzeitiges Zutropfen einer 10 %igen Salzsäure konstant gehalten wird. Nach vollständiger Zugabe wird 0,5 h nachgerührt.

Das Produkt wird filtriert, gewaschen, 12 h bei 110 °C getrocknet, 0,5 h bei 700°C geglüht, durch ein 100 µm Sieb gesiebt und mithilfe von XRD untersucht.

### Beispiel 5: 25 % SiO₂ bezogen auf das Substrat; Glühtemperatur: 500 °C

100 g Bi₂O₃ (Bismuth Oxide, varistor grade fine; mittlere Teilchengröße: 2 µm, Fa. 5N Plus Lübeck GmbH) werden in 2 I entmineralisiertem Wasser unter Rühren auf 75 °C erhitzt. Nun wird mit einer 10 %igen Salzsäure der pH-Wert der Suspension auf 7,5 eingestellt. Es folgt das Zudosieren einer Natronwasserglas-Lösung (91 g Natronwasserglas-Lösung, enthaltend 27,5 % SiO₂, werden in 91 g voll entsalztem Wasser gelöst), wobei der pH-Wert durch gleichzeitiges Zutropfen einer 10 %igen Salzsäure konstant gehalten wird. Nach vollständiger Zugabe wird 0,5 h nachgerührt.

Das Produkt wird filtriert, gewaschen, 15 h bei 130 °C getrocknet, 0,5 h bei 500 °C geglüht, durch ein 100 µm Sieb gesiebt und mithilfe von XRD untersucht.

### Beispiel 6: 100 % SiO₂ bezogen auf das Substrat; Glühtemperatur: 300°C

100 g Bi₂O₃ (Bismuth Oxide, varistor grade fine; mittlere Teilchengröße: 2 µm, Fa. 5N Plus Lübeck GmbH) werden in 2 I entmineralisiertem Wasser unter Rühren auf 75 °C erhitzt. Nun wird mit einer 10 %igen Salzsäure der pH-Wert der Suspension auf 7,5 eingestellt. Es folgt das Zudosieren einer Natronwasserglas-Lösung (364 g Natronwasserglas-Lösung, enthaltend 27,5 % SiO₂, werden in 364 g voll entsalztem Wasser gelöst), wobei der pH-Wert durch gleichzeitiges Zutropfen einer 10 %igen Salzsäure konstant gehalten wird. Nach vollständiger Zugabe wird 0,5 h nachgerührt.

Das Produkt wird filtriert, gewaschen, 12 h bei 120 °C getrocknet, 1 h bei 300 °C geglüht, durch ein 100 µm Sieb gesiebt und mithilfe von XRD untersucht.

### Beispiel 7: 25 % SiO₂ bezogen auf Bi₂O₃; Glühtemperatur: 300°C

Herstellung eines Bismut- enthaltenden Additivs mit der Zusammensetzung Bi₂O₃/SiO₂ und Einarbeitung in Polyamid
100 g Bi₂O₃ (Bismuth Oxide, varistor grade fine; mittlere Teilchengröße: 2 µm, Fa. 5N Plus Lübeck GmbH) werden in 2 I entmineralisiertem Wasser unter Rühren auf 75 °C erhitzt. Nun wird mit einer 10 %igen Salzsäure der pH-Wert der Suspension auf 7,5 eingestellt. Es folgt das Zudosieren einer Natronwasserglas-Lösung (91 g Natronwasserglas-Lösung, enthaltend 27,5 % SiO₂, werden in 91 g voll entsalztem Wasser gelöst), wobei der pH-Wert durch gleichzeitiges Zutropfen einer 10 %igen Salzsäure konstant gehalten wird. Nach vollständiger Zugabe wird 0,5 h nachgerührt.

Das Produkt wird filtriert, gewaschen, 15 h bei 110 °C getrocknet, 1 h bei 300 °C geglüht, durch ein 100 µm Sieb gesiebt und mithilfe von XRD untersucht.

### Beispiel 8: 50 % SiO₂ bezogen auf das Substrat; Glühtemperatur: 300°C

100 g BiOCI (Bismuth Oxycloride, mittlere Teilchengröße: 8-18 µm, Merck KGaA) werden in 2 I entmineralisiertem Wasser unter Rühren auf 75 °C erhitzt. Nun wird mit einer 10 %igen Natronlauge der pH-Wert der Suspension auf 7,5 eingestellt. Es folgt das Zudosieren einer Natronwasserglas-Lösung (182 g Natronwasserglas-Lösung, enthaltend 27,5 % SiO₂, werden in 182 g voll entsalztem Wasser gelöst), wobei der pH-Wert durch gleichzeitiges Zutropfen einer 10 %igen Salzsäure konstant gehalten wird. Nach vollständiger Zugabe wird 0,5 h nachgerührt.

Das Produkt wird filtriert, gewaschen, 12 h bei 110 °C getrocknet, 0,5 h bei 300 °C geglüht, durch ein 100 µm Sieb gesiebt und mit Hilfe von XRD untersucht.

Die gemäß der Beispiele 1-8 hergestellten Verbindungen zeigen laut XRD (Fa. Stoe) folgenden Phasen:

**Tabelle:**

| **Beispiel** | **Glühtemperatur (°C)** | **SiO₂ (% bez. auf Substrat vor dem Glühprozess** | **Substrat: SiO₂ vor dem Glühprozess** | **Befund** |
|---|---|---|---|---|
| 1 | 700 | 50 | 67:33 | Bi₂₄Cl₁₀O₃₁ + Bi₂SiO₅ + Bi₄(SiO₄)₃ |
| 2 | 700 | 6,25 | 94:6 | BiOCl + Bi₂₄Cl₁₀O₃₁ + Bi₁₂SiO₂₀ |
| 3 | 500 | 100 | 50:50 | Bi₂₄Cl₁₀O₃₁ + BiOCl + Bi₄(SiO₄)₃ |
| 4 | 700 | 12,5 | 89:11 | Bi₂₄Cl₁₀O₃₁ + Bi₂₄O₃₁Cl₁₀ + Bi₁₂SiO₂₀ |
| 5 | 500 | 25 | 80:20 | BiOCl + Bi₂₄Cl₁₀O₃₁ + Bi₄O₅Cl₂ |
| 6 | 300 | 100 | 50:50 | BiOCl + Bi₂₄Cl₁₀O₃₁ + Bi₄(SiO₄)₃ |
| 7 | 300 | 25 | 80:20 | BiOCl + Bi₂O₃ + Bi₁₂Cl₁₅O₆ |
| 8 | 300 | 50 | 67:33 | Bi₂₄Cl₁₀O₃₁ + BiOCl + Bi₂SiO₅ |

## Patentansprüche

1. Pigment der Formel I
nBi₂O₃ * mBiOX * oBiₓX_{y}O_{z} * pBiₐSi_{b}O_{c} I
wobei
X Halogen
x 2-30,
y 1-15, wobei im Fall y=1 dann z > 1 ist,
z 1-35
a 0-15
b 1-5
c 1-25,
n 0-5
m 0-5
o 1-5
p 1-5
bedeuten.

2. Pigment nach Anspruch 1, **dadurch gekennzeichnet, dass** X Chlor bedeutet.

3. Pigment nach Anspruch 1 oder 2, **dadurch gekennzeichnet, dass** o = 1 ist.

4. Pigment nach einem oder mehreren der Ansrpüche 1 bis 3, dadurch gezeichnet, dass x = 2-25 ist.

5. Pigment nach einem oder mehreren der Ansprüche 1 bis 4, dadurch gezeichnet, dass c = 1-20 ist.

6. Pigment nach einem oder mehreren der Ansprüche 1 bis 5, dadurch gezeichnet, daß es eine oder mehrere Verbindungen aus der Gruppe der Verbindungen
- Bi₄Cl₂O₅
- Bi₁₂Cl₆O₁₅
- Bi₂₄Cl₁₀O₃₁
- Bi₂SiO₅
- Bi₄(SiO₄)₃
- Bi₁₂SiO₂₀
enthält.

7. Pigment nach einem oder mehreren der Ansprüche 1 bis 6, **dadurch gekennzeichnet, dass** das Pigment folgende Mischphasen enthält:
- Bi₂₄Cl₁₀O₃₁ + Bi₂SiO₅ + Bi₄(SiO₄)₃ oder
- Bi₂₄C1₁₀O₃₁ + BiOCl oder
- Bi₂₄Cl₁₀O₃₁ + BiOCl + Bi₄O₅Cl₂ oder
- Bi₁₂Cl₆O₁₅ + BiOCl + Bi₂O₃ oder
- Bi₂₄Cl₁₀O₃₁ + Bi₄ Cl₂O₅
- Bi₁₂SiO₂₀ + Bi₂SiO₅ + Bi₄(SiO₄)₃
- Bi₂₄Cl₁₀O₃₁ + Bi₂SiO₅.

8. Pigment nach einem oder mehreren der Ansprüche 1 bis 7, **dadurch gekennzeichnet, dass** das Pigment Partikelgrößen von 0,01 - 100,5 µm aufweist.

9. Verfahren zur Herstellung des Pigments nach einem oder mehreren der Ansprüche 1 bis 8, **dadurch gekennzeichnet, dass** eine Bismut-Verbindung ausgewählt aus der Gruppe Bi₂O₃, BiOCl, BiONO₃, Bi(NO₃)₃, Bi₂O₂CO₃, BiOOH, BiOF, BiOBr, BiOC₃H₅O₇, Bi(C₇H₅O₂)₃, BiPO₄, Bi₂(SO₄)₃, BiₐM_{b}O_{c} (mit M = Zn, Ti, Fe, Cu, Al, Zr, P, Sn, Sr, Si, Y, Nb, La, Ta, Pr, Ca, Mg, Mo, W, Sb, Cr, Ba, Ce und a = 0,3-70, b = 0,05-8 und c = 1-100) mit SiO₂ in Gegenwart einer Chlorverbindung beschichtet und nachfolgend bei Temperaturen von 300-815 °C geglüht wird.

10. Verfahren nach Anspruch 9, **dadurch gekennzeichnet, dass** die Bismut-Verbindung Bi₂O₃ ist.

11. Verwendung des Pigment nach einem oder mehreren der Ansprüche 1 bis 8 als Additiv für die Lasermarkierung, für das Laserschweißen, in Farben, Lacken, Pulverlacken, Druckfarben, Kunststoffen, in Präparationen, Granulaten.

12. Polymermatrix enthaltend mindestens ein Pigment nach einem oder mehreren der Ansprüche 1 bis 8.

## Claims

1. Pigment of the formula I
nBi₂O₃ * mBiOX * oBiₓX_{y}O_{z} * pBiₐSi_{b}O_{c} I
where
X denotes halogen
x denotes 2-30,
y denotes 1-15, where, in the case where y=1, z is then > 1,
z denotes 1-35
a denotes 0-15
b denotes 1-5
c denotes 1-25,
n denotes 0-5
m denotes 0-5
o denotes 1-5
p denotes 1-5.

2. Pigment according to Claim 1, **characterised in that** X denotes chlorine.

3. Pigment according to Claim 1 or 2, **characterised in that** o = 1.

4. Pigment according to one or more of Claims 1 to 3, **characterised in that** x = 2-25.

5. Pigment according to one or more of Claims 1 to 4, **characterised in that** c = 1-20.

6. Pigment according to one or more of Claims 1 to 5, **characterised in that** it comprises one or more compounds from the group of the compounds
- Bi₄Cl₂O₅
- Bi₁₂Cl₆O₁₅
- Bi₂₄Cl₁₀O₃₁
- Bi₂SiO₅
- Bi₄(SiO₄)₃
- Bi₁₂SiO₂₀.

7. Pigment according to one or more of Claims 1 to 6, **characterised in that** the pigment comprises the following mixed phases:
- Bi₂₄Cl₁₀O₃₁ + Bi₂SiO₅ + Bi₄(SiO₄)₃ or
- Bi₂₄Cl₁₀O₃₁ + BiOCl or
- Bi₂₄Cl₁₀O₃₁ + BiOCl + Bi₄O₅Cl₂ or
- Bi₁₂Cl₆O₁₅ + BiOCl + Bi₂O₃ or
- Bi₂₄Cl₁₀O₃₁ + Bi₄Cl₂O₅
- Bi₁₂SiO₂₀ + Bi₂SiO₅ + Bi₄(SiO₄)₃
- Bi₂₄Cl₁₀O₃₁ + Bi₂SiO₅.

8. Pigment according to one or more of Claims 1 to 7, **characterised in that** the pigment has particle sizes of 0.01 - 100.5 µm .

9. Process for the preparation of the pigment according to one or more of Claims 1 to 8, **characterised in that** a bismuth compound selected from the group Bi₂O₃, BiOCl, BiONO₃, Bi(NO₃)₃, Bi₂O₂CO₃, BiOOH, BiOF, BiOBr, BiOC₃H₅O₇, Bi(C₇H₅O₂)₃, BiPO₄, Bi₂(SO₄)₃, BiₐM_{b}O_{c} (where M = Zn, Ti, Fe, Cu, Al, Zr, P, Sn, Sr, Si, Y, Nb, La, Ta, Pr, Ca, Mg, Mo, W, Sb, Cr, Ba, Ce and a = 0.3-70, b = 0.05-8 and c = 1-100) is coated with SiO₂ in the presence of a chlorine compound and subsequently calcined at temperatures of 300-815°C.

10. Process according to Claim 9, **characterised in that** the bismuth compound is Bi₂O₃.

11. Use of the pigment according to one or more of Claims 1 to 8 as additive for laser marking, for laser welding, in paints, coatings, powder coatings, printing inks, plastics, in preparations, granules.

12. Polymer matrix comprising at least one pigment according to one or more of Claims 1 to 8.

## Revendications

1. Pigment de la formule I :
nBi₂O₃ * mBiOX * oBiₓX_{y}O_{z} * pBiₐSi_{b}O_{c} I
formule dans laquelle :
X représente halogène ;
x représente 2-30 ;
y représente 1-15, où, dans le cas où y = 1, z est alors > 1 ;
z représente 1-35 ;
a représente 0-15 ;
b représente 1-5 ;
c représente 1-25 ;
n représente 0-5 ;
m représente 0-5 ;
o représente 1-5 ;
p représente 1-5.

2. Pigment selon la revendication 1, **caractérisé en ce que** X représente le chlore.

3. Pigment selon la revendication 1 ou 2, **caractérisé en ce que** o = 1.

4. Pigment selon une ou plusieurs des revendications 1 à 3, **caractérisé en ce que** x = 2-25.

5. Pigment selon une ou plusieurs des revendications 1 à 4, **caractérisé en ce que** c = 1-20.

6. Pigment selon une ou plusieurs des revendications 1 à 5, **caractérisé en ce qu'**il comprend un ou plusieurs composé(s) pris parmi le groupe des composés :
- Bi₄Cl₂O₅
- Bi₁₂Cl₆O₁₅
- Bi₂₄Cl₁₀O₃₁
- Bi₂SiO₅
- Bi₄(SiO₄)₃
- Bi₁₂SiO₂₀.

7. Pigment selon une ou plusieurs des revendications 1 à 6, **caractérisé en ce que** le pigment comprend les phases mixtes qui suivent :
- Bi₂₄Cl₁₀O₃₁ + Bi₂SiO₅ + Bi₄(SiO₄)₃ ou
- Bi₂₄Cl₁₀O₃₁ + BiOCl ou
- Bi₂₄Cl₁₀O₃₁ + BiOCl + Bi₁₄O₅Cl₂ ou
- Bi₁₂Cl₆O₁₅ + BiOCl + Bi₂O₃ ou
- Bi₂₄Cl₁₀O₃₁ + Bi₄ Cl₂O₅
- Bi₁₂SiO₂₀ + Bi₂SiO₅ + Bi₄(SiO₄)₃
- Bi₂₄Cl₁₀O₃₁ + Bi₂SiO₅.

8. Pigment selon une ou plusieurs des revendications 1 à 7, **caractérisé en ce que** le pigment présente des tailles de particule de 0,01 - 100,5 µm.

9. Procédé pour la préparation du pigment selon une ou plusieurs des revendications 1 à 8, **caractérisé en ce qu'**un composé de bismuth qui est sélectionné parmi le groupe Bi₂O₃, BiOCl, BiONO₃, Bi(NO₃)₃, Bi₂O₂CO₃, BiOOH, BiOF, BiOBr, BiOC₃H₅O₇, Bi(C₇H₅O₂)₃, BiPO₄, Bi₂(SO₄)₃, BiₐM_{b}O_{c} (où M = Zn, Ti, Fe, Cu, Al, Zr, P, Sn, Sr, Si, Y, Nb, La, Ta, Pr, Ca, Mg, Mo, W, Sb, Cr, Ba, Ce et a = 0,3-70, b = 0,05-8 et c = 1-100) est revêtu de SiO₂ en présence d'un composé de chlore et est ensuite calciné à des températures de 300-815°C.

10. Procédé selon la revendication 9, **caractérisé en ce que** le composé de bismuth est Bi₂O₃.

11. Utilisation du pigment selon une ou plusieurs des revendications 1 à 8 en tant qu'additif pour le marquage au laser, pour le soudage au laser, dans les peintures, les revêtements, les revêtements à base de poudres/pulvérulents, les encres d'impression, les matières plastiques, dans les préparations, les granules.

12. Matrice de polymère comprenant au moins un pigment selon une ou plusieurs des revendications 1 à 8.
